# EUROPEAN PATENT SPECIFICATION

(11) **EP 4 613 641 B1**
(45) Date of publication and mention of the grant of the patent: **11.11.2026**
(21) Application number: 24162380.0
(22) Date of filing: 08.03.2024
(51) Int. Cl.: B64C 9/22, B64C 9/02, B64C 9/24

(54) **WING FOR AN AIRCRAFT AND METHOD OF RIGGING**
FLÜGEL FÜR EIN FLUGZEUG UND VERFAHREN ZUM AUFRÜSTEN
AILE POUR UN AÉRONEF ET PROCÉDÉ DE GRÉEMENT

(43) Date of publication of application: 10.09.2025
(73) Proprietor: Airbus Operations GmbH, 21129 Hamburg (DE)
(72) Inventor: Haunert, Jan, 21129 Hamburg (DE); Schlipf, Bernhard, 21129 Hamburg (DE)
(74) Representative: Airbus Germany

(56) References cited:
- US-A- 4 687 162
- US-A1- 2016 083 082
- US-A1- 2020 115 031

## Description

The present disclosure relates to a wing for an aircraft and a method of rigging a high lift assembly of the wing of an aircraft, for example a method of rigging a connection assembly connecting a high lift body of a high lift assembly of a main wing of an aircraft.

The described wing for an aircraft comprises a main wing and a high lift assembly, the high lift assembly comprising a high lift body and a connection assembly movably connecting the high lift body to the main wing such that the high lift body is movable between a retracted position and at least one extended position (e.g. movable relative to the main wing). To enable movement of the high lift body between the extended and retracted position, the high lift body comprises a slat track and a roller bearing that movably connects the high lift body to the main wing. The high lift body may be or comprise a leading edge slat or a trailing edge flap of a wing for an aircraft.

The connection assembly comprises a first connection profile and a second connection profile (e.g. at least one second connection profile) and is mounted to the main wing by a mounting arrangement. The connection assembly may comprise a slat track and a roller bearing that movably connects the high lift body (212) to the main wing (5), such that the high lift body (212) is movable between a retracted position and at least one extended position. The mounting arrangement comprises a primary connection interface and a secondary connection interface. A connection member corresponding to each of the primary connection interface and the secondary connection interface connects the connection assembly to the main wing. In particular, the primary connection interface of the mounting arrangement is connected to the first connection profile via a corresponding connection member (e.g. a first connection member), and the secondary connection interface of the mounting arrangement is connected to one of the at least one second connection profiles of the connection assembly via a corresponding connection member (e.g. a second connection member).

Wings for aircraft generally have connection assemblies that movably connect a high lift body to the main wing, for example so as to allow the high lift body to move between an extended and a retracted position. The connection assembly in the wing of an aircraft may be supported by the wing box of the aircraft, and connected to the wing box via an interface. The wing box provides structural support to the wing of the aircraft, and often comprises or defines a rib structure at the forward leading edge of the wing externally of the wing box itself, which may be used to carry leading edge devices such as slats, which may be operated and supported via a connection assembly.

The connection assembly may usually be assembled with the wing box of the wing for an aircraft. During assembly, the connection assembly is connected to the wing box via an interface that may be toleranced and configured so as to ensure a desired alignment of the wing box and the connection assembly. The alignment between the wing box and the connection assembly is important since this will also determine the orientation of the high lift body relative to the main wing. The installation of a connection assembly to the main wing is therefore a task which requires a high degree of precision. Installation of the connection assembly may be done during assembly of the wing box, meaning that the wing box and the connection assembly may be assembled together so as to set a desired orientation of the connection assembly relative to the wing box.

US 4 687 162 A describes a wing for an aircraft comprising a main wing and a high lift assembly having a connection assembly.

It is desirable to modularise the process of constructing an aircraft, for example to improve efficiency in the process of constructing the aircraft and/or to automate some steps involved in the construction of an aircraft. Modularisation can also have the advantage that repair and replacement of parts is easier, as individual parts (e.g. modules) of the aircraft may be taken from the aircraft, and replaced with an identical module that does not need any replacement work, as well as permitting smaller modules to be assembled quickly and easily by a single worker, or a small number of workers. This would then allow the part that needs repair to be repaired on the ground without the rest of the aircraft also having to remain grounded with it, this greatly reducing the grounding times of the aircraft. However, in the case of the connection assembly, the high degree of precision required means that separating the construction of the wing box from the placement of the connection assembly into discreet steps would render sufficiently accurate placement of the connection assembly impossible, since it would have to be attached to a previously constructed wing box, with which there no longer existed the freedom to adjust the relative position of certain components thereof.

Therefore it is an object of the invention to provide a wing assembly and a method for rigging a high lift assembly of the wing of an aircraft that permits accurate orientation of the high lift body and therefore facilitates the modular construction of the wing of an aircraft.

The object of the invention is realised according to the appended independent claim 1, in that the secondary connection interface comprises an elongate aperture and a elongate interface component (e.g. a couplable and decouplable component form the secondary interface) that is located between the corresponding connection member (for example, each second connection member, each connection member corresponding to the secondary interface) and the secondary interface so as to restrict relative motion between the secondary connection interface and the connection member to secure the connection assembly relative to the main wing and prevent relative motion therebetween. This has the effect of permitting the connection assembly to be mounted to the main wing even if the secondary connection interface is not exactly lined up with the secondary connector. Since the secondary connection interface is elongate in shape, as long as the connection member fits somewhere in the elongated connection interface, an elongated interface component may then be used to prevent or restrict relative movement of the connection member, regardless of its location relative to the secondary connection interface. The elongate interface component may allow the secondary connection interface to be easily configured and/or adapted as required. This permits some degree of adjustment of the secondary connection interface to permit attachment of the high lift assembly (and in particular the connection assembly) relative to the main wing, even if the main wing has been constructed in a previous step.

The main wing may comprise a preassembled wing box. The connection assembly may be mounted to the preassembled wing box, e.g. via the mounting arrangement. A preassembled wing box may be a wing box that has been fully assembled before mounting of the connection assembly thereto (e.g. to the main wing).

The primary connection interface and the secondary connection interface of the mounting arrangement may be defined on a wing box structure of the main wing. The wing box structure may be a flange or the like that protrudes from the main wing. As such, it may not be necessary to provide any additional connection means to connect the connection assembly to the main wing.

The mounting arrangement may comprise a bracket, and the primary and secondary connection interfaces may be defined on the bracket. The connection assembly may be mounted to the main wing via the bracket.

The bracket may connect the connection assembly to spar of the main wing.

The primary interface may comprise a circular aperture and the elongate aperture of the secondary connection interface may comprise a major axis oriented tangentially relative to the primary interface. The elongate aperture may comprise a major axis that is straight or that is curved. Where the elongate aperture comprises a major axis that is curved, then the elongate aperture may also be curved in shape, as may the elongate interface component. The curve of the major axis of the aperture may be an arc, and may have a radius of curvature equal to the distance between the major axis and the rotation axis of the primary connection interface. The shape of the elongate interface component (e.g. the shape of the periphery of the elongate interface component) may match that of the secondary connection interface.

The length of the major axis of the secondary connection interface may permit deviation of the connection assembly about an axis extending through the centre of the primary interface (e.g. where the primary interface is circular in shape) by between 0.5 degrees and 6 degrees, for example between 2 and 4 degrees. The length of the major axis and the elongated interface may vary depending on the distance between the major axis and the axis of the first interface.

The geometry of the elongate interface component may be configured based on information about the position of the secondary connection interface relative to the corresponding connection member. For example the elongate interface component may comprise an aperture therein for the placement of a connection member therethrough. The aperture may be located such that when the elongate interface component is located in the secondary connection interface, the aperture is located in the middle of the secondary connection interface (e.g. the elongate secondary connection interface), may be located closer to one axial end or lateral side of the elongate secondary connection interface, for example by 1mm, 2mm, etc. the elongate interface component may be able to be designed having geometry that matches the location of the second connection member relative to the secondary connection interface. The aperture may therefore be located axially in the middle of the elongate interface component, or closer to one axial end thereof.

In some examples, a plurality of elongate interface components may be produced having differing geometry, and one of the plurality selected and installed between the secondary connection interface and the second connection member, for example an elongate interface component that has a geometry that best matches the location of the second connection member relative to the secondary connection interface.

The mounting arrangement may comprise one primary connection interface (e.g. exactly one) and two secondary connection interfaces (e.g. exactly two), and may comprise one first connection profile and two second connection profiles. This may facilitate mounting of the connection assembly to the wing, for example by a single individual.

The primary connection interface may be located relatively above each of the at least one secondary connection interface in the orientation of the wing when attached to an aircraft located on the ground.

The primary connection interface may be located relatively forward of each of the at least one secondary connection interface in the orientation of the wing when attached to an aircraft located on the ground.

The connection members corresponding to each of the primary connection interface and the at least one secondary connection interface may be each of the same type.

The elongate interface component may be in the form of an elongate bush. The elongate interface component may be configured to prevent relative motion between the secondary connection interface and the connection member (e.g. the second connection member). The elongate interface component may be configured to permit limited relative motion between the secondary connection interface and the connection member - i.e. further limited compared to the limitations provided by the secondary connection interface.

The connection members corresponding to each of the primary connection interface and the at least one secondary connection interface may each comprise an elongate connector. The elongate connector may be in the form of a bolt, a connection rod, a screw, or the like.

The connection assembly may be mounted to the main wing by a first and a second mounting arrangement, where the first mounting arrangement may comprise a first set of primary and secondary connection interfaces, and the second mounting arrangement comprise a second set of primary and secondary connection interfaces. In this example, the first set of primary and secondary interfaces may be a mirror image of the second set of primary and secondary connection interfaces.

The first mounting arrangement may mount the main wing to the connection assembly at a first side thereof, and the second mounting arrangement may mount the main wing to the connection assembly at a second, oppositely disposed, side thereof.

A second aspect relates to a method according to appended independent claim 13 for rigging the high lift assembly of the wing according to the previous aspect, comprising providing the main wing and the high lift assembly, positioning the connecting assembly in a desired position relative to the main wing, connecting the connection assembly to the main wing via a mounting arrangement comprising a primary interface, at least one secondary interface and a connection member corresponding to each of the primary connection interface and the at least one secondary connection interface, connecting the primary interface of the mounting arrangement to the first connection profile of the connection assembly via the corresponding connection member, measuring the relative location of the secondary connection interface relative to the corresponding connection member with the connection assembly in the desired position relative to the main wing, configuring the geometry of the elongate interface component based on information about the position of the secondary connection interface relative to the corresponding connection member such that the elongate interface component restricts relative motion between the secondary connection interface and the corresponding connection member, connecting the second interface to the at least one second connection profile of the connection assembly via the corresponding connection member such that the connection member engages the elongate interface component so as to restrict relative movement between the connection member and the secondary interface.

The method may comprise providing the main wing and/or the high lift assembly in a preassembled form. The method may comprise assembling the main wing and/or the high lift assembly before the connection assembly is mounted to the main wing and wherein the elongate interface component may be able to be selected (e.g. from a plurality of elongate interface components having different geometry) and coupled to the secondary connection interface after.

The method may comprise providing the connection assembly to be mounted to the main wing as a connection assembly module. The method may comprise providing the connection assembly with connection profiles that are configured to be aligned with the primary and secondary connection interfaces (e.g. each connection profile is configured to be aligned with one of the primary and secondary connection interfaces), for example when the connection assembly is positioned in a desired orientation relative to the main wing.

The method may comprise locking the connection assembly in a desired position relative to the main wing, for example by tightening a connection member relative to the main wing, by providing a locking member to prevent movement of the connection assembly relative to the main wing, or the like.

A third aspect relates to an aircraft according to appended claim 15, comprising a wing according to the previously described aspects.
- Figure 1: is a perspective view of an aircraft, showing a wing of the aircraft;
- Figure 2: is a schematic view of a connection assembly in an aircraft;
- Figure 3: is a schematic view of a connection assembly cassette;
- Figures 4A-C: provide views of a connection assembly cassette mounted to an aircraft wing;
- Figure 5A: is a connection assembly movably connected to a wing of an aircraft
- Figure 5B: shows an alternative connection between a connection assembly and a wing of an aircraft;
- Figure 6A: illustrates a connection assembly mounted to a wing of an aircraft in a first position;
- Figure 6B: illustrates a connection assembly mounted to a wing of an aircraft in a second position;
- Figures 7A-C: schematically illustrate an elongated interface component located between a connection member and a secondary interface.

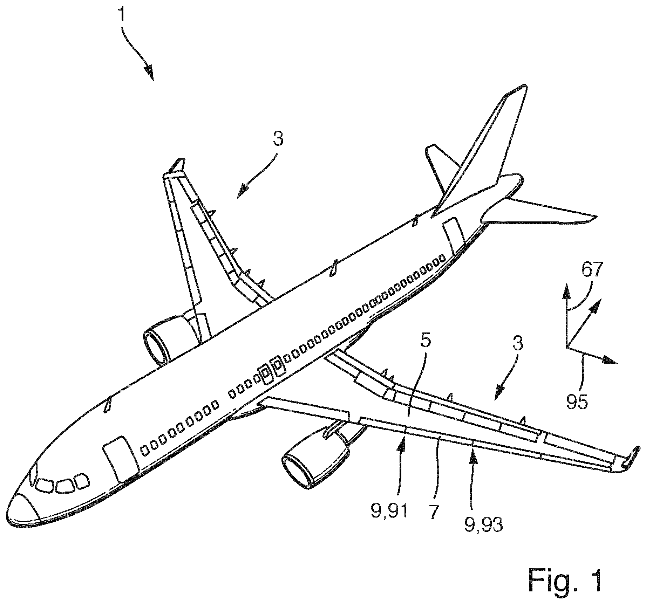

In Fig. 1 an aircraft 1 according to an embodiment of the present invention is illustrated. The aircraft 1 comprises a wing 3 that is formed according to an embodiment of the present invention.

As shown in Fig. 1, the connection assembly 9 relates to a first connection assembly 91, and the wing 3 comprises a second connection assembly 93 connecting the slat 7 to the main wing 5 in a position spaced apart from the first connection assembly 91 in a wing span direction 95, and wherein the second connection assembly 93 is formed as the first connection assembly 91. Additionally illustrated in Fig. 1 is a wing thickness direction 67. While, in Fig. 1, the connection assembly 9 is illustrated as connecting slat 7 to the main wing 5, it should also be understood that the connection assembly 9 may be used to connect a trailing edge flap 2 to the wing 5 of an aircraft.

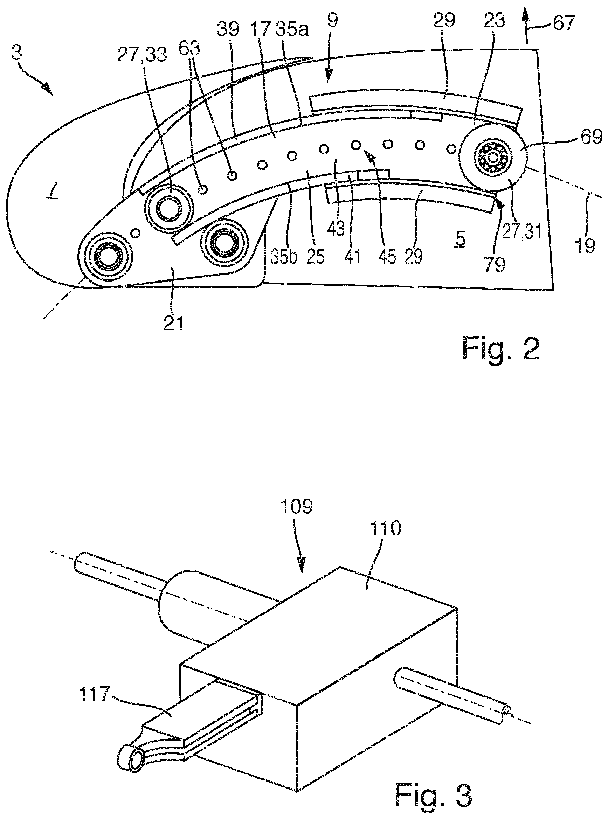

Fig. 2 shows an example of a connection assembly 9 of a wing for an aircraft, which is configured to connect a slat to the main wing of an aircraft. The connection assembly 9 may be used in combination with a wing 1 similar to that as described in Fig. 1, where the wing 1 comprises a main wing 5, a slat 7, and a connection assembly 9 (according to the present disclosure) movably connecting the slat 7 to the main wing 5, such that the slat 7 is movable between a retracted position and at least one extended position.

In Figure 2, the connection assembly 9 comprises a slat track 17 that extends along a track longitudinal axis 19 between a front end 21 and a rear end 23. The front end 21 of the slat track 17 is fixedly mounted to the slat 7. The rear end 23 and the intermediate portion 25 of the slat track 17 are movably mounted to the main wing 5 by a roller bearing 27 such that the slat track 17 is movable along the track longitudinal axis 19.

An alternative connection assembly 109 is illustrated in Figure 3, this time in the form of a connection assembly cassette. Here, the slat track 117 is partially located inside a cassette housing 110, and the roller bearing on which the slat track 117 is located completely in the housing 110. In order to move the slat track 117 between an extended and a retracted position, an actuator or actuators are provided that penetrate the cassette housing 110 and permit movement of the slat track 117.

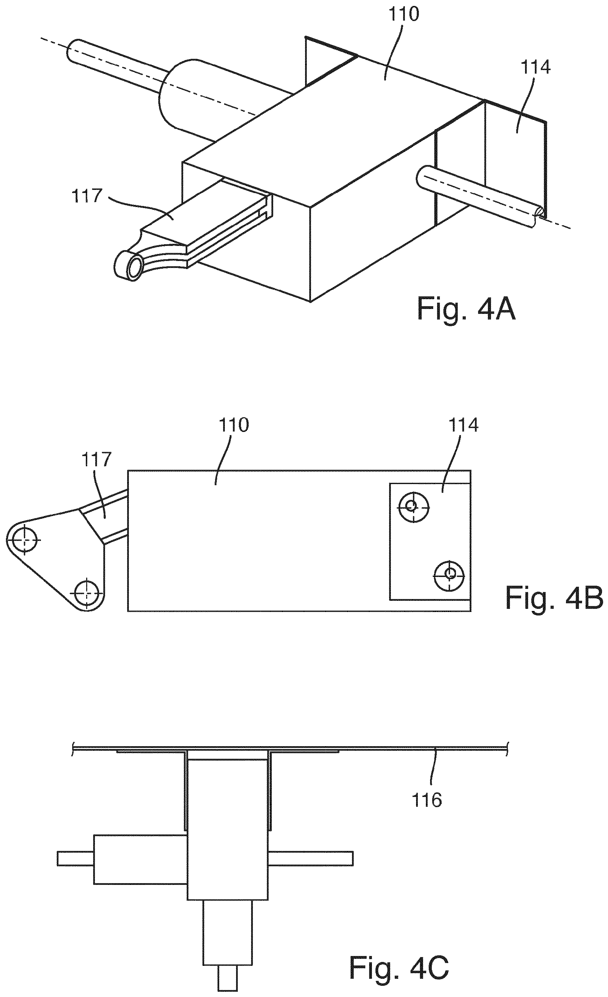

In both the case of the connection assembly 9, 109 having an "open" construction as shown in Figure 2, or a "cassette" construction as is shown in Figure 3, the connection assembly may be mounted to the main wing of an aircraft via a mounting arrangement. One example of a mounting arrangement 114 is illustrated in Figure 4A. Here, a cassette housing 110 is mounted to a main wing 116 of an aircraft via the mounting arrangement 114. The mounting arrangement 114 is in the form of a bracket, which comprises a number of locations at which the bracket is connected to the cassette 110, for example via a known connector. In this example, the main wing 116 (and in particular the wing box of the main wing) has been constructed at the same time as the cassette 110 was mounted thereon. This has the effect of permitting the orientation of the cassette 110 relative to the main wing 116 to be adapted such that the slat track 117 is at the desired angle relative to the main wing 116. The exact orientation required by the connection assembly 9, 109 relative to the main wing may change slightly depending on the exact connection assembly 9, 109, for example due to manufacturing tolerances during the production of the aircraft wing, the main wing (including the wing box) and/or the connection assembly itself. Therefore, at present it is important to ensure that the connection assembly 9, 109 is adequately oriented relative to the main wing 116 during production thereof.

While the desire to modularise the production of an aircraft provides advantages in terms of more efficient production, as well as improved processes for the repair and replacement of aircraft parts, it has the effect that the already assembled (e.g. preassembled) parts are not able to be adjusted to account for slight anomalies in the dimensions of parts (e.g. of a connection assembly) so as to accurately orient those parts relative to the preassembled structure.

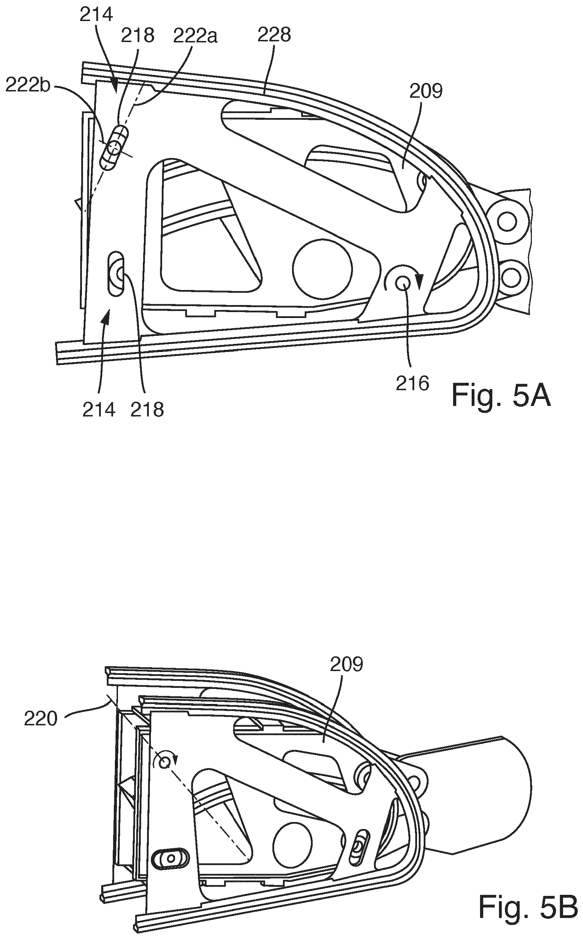

The connection assembly 209 illustrated in Figures 5A and 5B is illustrated as being connected to a main wing of an aircraft via a mounting arrangement 214. Here, the mounting arrangement 214 comprises a primary connection interface 216, a secondary connection interface 218 and a connection member that corresponds to each of the primary connection interface 216 and the two secondary connection interfaces 218. Although the connection member is not shown, it may be a screw, a bolt or any other member (e.g. elongate member) that is able to engage the connection assembly 209 and the respective primary and secondary connection interfaces 208, which the reader will readily understand.

The mounting arrangement 214 may additionally comprise a bracket in which the primary and secondary connection interfaces 216, 218 are located, or may comprise or be partially defined by a flange that is part of the main wing of an aircraft, for example part of the leading edge ribs of an aircraft. In some examples, the mounting arrangement 214 may comprise a connection to a spar of the main wing, for example via a bracket. In the examples of Figure 5A and 5B, the mounting arrangement 214 (here, the primary and secondary connection interfaces) are partially defined by a wing box structure 226 (e.g. a flange protruding therefrom) of the main wing, which may protrude from the wing box.

Here the primary connection interface 216 is circular in shape and comprises a rotation axis 220 that is oriented perpendicular to the surface in which the primary connection interface 216 is located. The secondary connection interfaces 218 are, in contrast, elongate in shape, and each comprises a major axis 222a and a minor axis 222b, wherein the major axis 222a runs the length of the secondary connection interface 218 and the minor axis 222b runs the width of the secondary connection interface 218, where both the major axis 222a and the minor axis 222b intersect at the mid-point of the secondary connection interface 218.

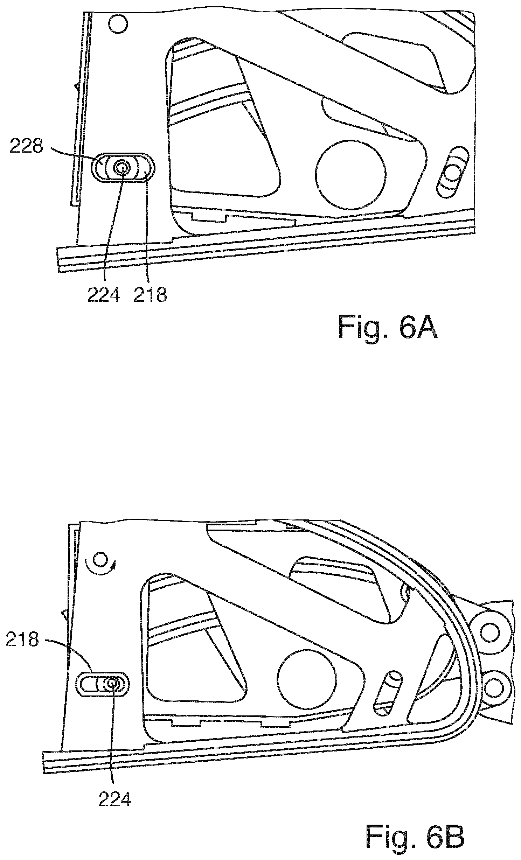

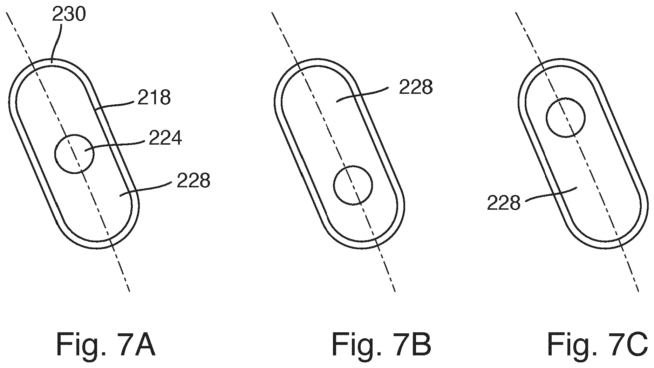

In practice, the connection assembly 209 is connected to the main wing of the aircraft via connection members that engage with an attachment profile (e.g. a connection profile) in the connection assembly 209, for example a hole, a threaded bore, or the like. The number of attachment profiles may equal the number of primary and secondary connection interfaces, and each connection interface may comprise a corresponding attachment profile. The connection members each engage one connection interface, 216, 218 which may be a primary connection interface or a secondary connection interface 216, 218. The type of connection member that engages the primary connection interface 216 may be the same as the type of connection member that engages the secondary connection interface 218. The connection members may be inserted through the connection interfaces 216, 218 and into an attachment profile in the connection assembly 209, and may be initially positioned such that movement between the connection assembly 209 and the primary and secondary connection assemblies 216, 218 is permitted about the rotation axis 220 of the primary connection interface 216. In particular, rotational movement of the connection assembly about the rotation axis 220 may be permitted in order to obtain a preferable orientation of the connection assembly 209 relative to the main wing. To permit such relative movement the connection members may be inserted into, but not fully tightened onto, the first and second connection assemblies 216, 218. Once the desired orientation of the connection assembly 209 relative to the main wing has been obtained, an elongate interface component (see Figures 6A, 6B and 7A-C) may be inserted between the second connection interface 218 and the connection member 224 to restrict (e.g. to prevent) relative movement between the connection member 224 and the second connection interface, thereby locking the connection assembly 209 in a desired location. The position of the connection member 224 relative to the second interface 218 may be difficult to exactly predict because of slight differences caused by manufacturing tolerances, which may in particular be significant given that the main wing (or at least sections thereof, e.g. the wing box) may be preassembled.

Rotation of the connection assembly 209 relative to the connection interfaces 216, 218 may be restricted by the length of the secondary connection interfaces 218, in particular the length of the connection interfaces 216, 218 along the major axis thereof. Rotation of the connection assembly 209 about the rotation axis 220 may have the effect that the connection members positioned in the secondary connection interfaces 218 move translationally relative to the secondary connection interfaces 218 along the major axis thereof. Since the connection members move in an arc about the rotation axis 220 of the primary connection interface, translational movement of the connection member in the minor axis may also be present. Rotation of the connection assembly 209 relative to the connection interfaces 216, 218 may then be prevented once elongate interface members have been coupled to the second interfaces 218.

Rotational movement of the connection assembly 209 relative to the first and second connection interfaces 216, 218 and therefore relative to the main wing may be in the order of between 0,5 degrees and 6 degrees, for example between 2 and 4 degrees.

By being able to rotate the connection assembly 209 relative to the main wing, the connection assembly may be precisely oriented relative to the main wing to account for any anomalies that may occur due to manufacturing tolerances, thus also enabling a modular construction of the wing of the aircraft, and then held in a desired location by the installation (e.g. coupling, mounting, etc.) of elongate interface members installed between the second connection interface 218 and the connection member 224.

As illustrated in Figures 5A and 5B, different configurations of primary engagement interface and secondary engagement interface 216, 218 are possible. For example, the secondary interfaces 218 may be located proximal to the main wing (e.g. the wing box) while the first interface 216 may be located distal to the main wing (although still located on the same flange as the secondary interfaces 216). In Figure 5B, it is illustrated that the secondary interfaces 218 are located lower (e.g. closer to the ground when the aircraft is in a grounded position) than the primary interface 216. In both examples, just one single primary interface 216 is present, and two secondary interfaces 218 are present, however it should be noted that any number of secondary interfaces 218 may be present, such as one, three, four or more.

It should also be noted that the major axis 222a of the secondary interfaces 218 may be considered to be located at a tangent to the circular form of the primary interface 216. The minor axis 222b of the secondary interfaces 218 may also be aligned with the rotation axis 220 of the primary interface 216 such that it intersects the rotation axis.

Figures 6A and 6B show movement of a connection member 224 relative to a secondary connection interface 218 with an elongate interface member 228. As can be seen, translational movement of the connection member 224 along the major axis of the secondary connection interface 218 may occur during movement of the connection assembly 209 relative to the main wing to find the desired location of the connection assembly 209 relative to the main wing. In Figure 6A, the elongate interface component 228 (which may be in the form of an elongate bush) comprises an aperture in the centre thereof to restrict (e.g. prevent) movement of the connection member 224 relative to the second connection interface 218. In contrast, in Figure 6B, the elongate interface member 228 comprises an aperture located nearer to one axial side than to the other, since the desired position of the connection member 224 is not in the centre of the length of the second connection interface 218.

In Figures 7A-C, there is illustrated in greater detail the relative position between a connection member 224 and a second connection interface 218 in which an elongate interface component 228 is mounted. It can also be seen that the elongate interface component 228 comprises a lip 230 that protrudes over the edge of the elongate aperture forming the second connection interface 218 so as to secure the interface component 228 to the second connection interface 218.

As can be seen, the illustration of Figure 7A illustrates the connection member 224 being located axially in the centre of the second connection interface 218. In Figure 7B, the connection member 224 is located axially closer to one side of the connection interface 218 than the other side, while the opposite is true of Figure 7C. In use, a selection of interface members 228 may be available that are able to be located between the connection member 224 and the second connection interface 218 that may have an aperture preformed at a variety of locations such that a user can choose the interface component 228 that best matches the location of the connection member 224 relative to the second connection interface 218 (for example as a result of measurements taken to assess the location between the connection member 224 and the second connection interface 218. Alternatively, the location of the connection member 224 relative to the second connection interface 218 may be measured and the elongate interface component 228 may be manufactured specifically to match the geometry of the second connection interface 218 and the connection member 224.

While the primary connection interface 216 has been illustrated as having a circular form, it should be noted that other forms of primary connection interface 216 may also be possible, such as an oval shape, that may also define a rotation axis 220 axis about which the connection assembly 209 may rotate.

## Claims

1. A wing (3) for an aircraft (1), comprising:
a main wing (5); and
a high lift assembly comprising:
a high lift body comprising a high lift structure; and
a connection assembly (209) movably connecting the high lift body (12) to the main wing (5), such that the high lift body is movable between a retracted position and at least one extended position,
the connection assembly (209) comprising a first connection profile and at least one second connection profile;
the connection assembly (209) being mounted to the main wing (5) by a mounting arrangement (214), the mounting arrangement (214) comprising a primary connection interface (216) and a secondary connection interface (218), the primary connection interface (216) being connected to the first connection profile (216) via a corresponding connection member (224) and the secondary connection interface (218) being connected to one of the at least one second connection profiles (218) via a corresponding connection member (224);
wherein
the secondary connection interface (218) comprises an elongate aperture;
**characterized in that** the secondary connection interface (218) comprises an elongate interface component that is located between the corresponding connection member (224) and the secondary interface so as to restrict relative motion between the secondary connection interface (218) and the connection member (224) to secure the connection assembly (209) relative to the main wing (5) and prevent relative motion therebetween.

2. The wing (3) according to claim 1, wherein the primary connection interface (216) and the secondary connection interface (218) of the mounting arrangement (214) are defined on a wing box structure (226) of the main wing.

3. The wing (3) according to claim 1, wherein the mounting arrangement (214) comprises a bracket, the primary and secondary connection interfaces (216, 218) are defined on the bracket, and connection assembly (209) is mounted to the main wing (5) via the bracket.

4. The wing (3) according to claim 3, wherein the bracket connects the connection assembly (209) to a spar of the main wing (5).

5. The wing (3) according to any preceding claim, wherein the primary interface (216) comprises a circular aperture and wherein the elongate aperture of the secondary connection interface (218) comprises a major axis (218) oriented tangentially relative to the primary interface (216).

6. The wing (3) according to any preceding claim, wherein the geometry of the elongate connection component is configured based on information about the position of the secondary connection interface (218) relative to the corresponding connection member.

7. The wing (3) according to any preceding claim, comprising one primary connection interface (216) and two secondary connection interfaces (218), and one first connection profile and two second connection profiles.

8. The wing (3) according to any preceding claim, wherein the primary connection interface (216) is located relatively distal to the main wing (5) and each of the at least one secondary connection interface (218) is located relatively proximal to the main wing (5).

9. The wing (3) according to any preceding claim, wherein the elongate interface component is in the form of an elongate bush, and is configured to prevent relative motion between the secondary connection interface (218) and the connection member (224).

10. The wing (3) according to any preceding claim, wherein the connection members (224) corresponding to each of the primary connection interface (216) and the at least one secondary connection interface (218) each comprise an elongate connector.

11. The wing (3) according to any preceding claim, the connection assembly (209) being mounted to the main wing (5) by a first and a second mounting arrangement, the first mounting arrangement comprising a first set of primary and secondary connection interfaces, and the second mounting arrangement comprising a second set of primary and secondary connection interfaces, the first set of primary and secondary interfaces being a mirror image of the second set of primary and secondary connection interfaces.

12. The wing (3) according to claim 11, where the first mounting arrangement mounts the main wing to the connection assembly at a first side thereof, and the second mounting arrangement mounts the main wing to the connection assembly at a second, oppositely disposed, side thereof.

13. A method for rigging the high lift assembly of the wing (3) according to any of claims 1 to 12, comprising:
providing the main wing (5) and the high lift assembly;
positioning the connecting assembly (209) in a desired position relative to the main wing (5);
connecting the primary connection interface (216) of the mounting arrangement (214) to the first connection profile of the connection assembly (209) via the corresponding connection member (224);
measuring the relative location of the secondary connection interface relative to the corresponding connection member (224) with the connection assembly (209) in the desired position relative to the main wing (5);
configuring the geometry of the elongate interface component based on information about the position of the secondary connection interface relative to the corresponding connection member such that the elongate interface component restricts relative motion between the secondary connection interface and the corresponding connection member (224);
connecting the second interface (218) to the second connection profile of the connection assembly (209) via the corresponding connection member (224) such that the connection member (224) engages the elongate interface component so as to restrict relative movement between the connection member (224) and the secondary interface.

14. The method of claim 13, wherein the main wing (5) and/or the high lift assembly are provided in a preassembled form, and are assembled before the connection assembly (209) is mounted to the main wing (5), and wherein the elongate interface component is able to be coupled to the secondary connection interface after measuring the relative location of the secondary connection interface relative to the corresponding connection member.

15. An aircraft (1) comprising a wing (3) according to any of the claims 1 to 12.

## Patentansprüche

1. Ein Flügel (3) für ein Flugzeug (1), umfassend:
einen Hauptflügel (5); und
eine Hochauftriebsanordnung, umfassend:
einen Hochauftriebskörper, der eine Hochauftriebsstruktur umfasst; und
eine Verbindungsanordnung (209), die den Hochauftriebskörper (12) beweglich mit dem Hauptflügel (5) verbindet, sodass der Hochauftriebskörper zwischen einer eingefahrenen Position und mindestens einer ausgefahrenen Position beweglich ist,
wobei die Verbindungsanordnung (209) ein erstes Verbindungsprofil und mindestens ein zweites Verbindungsprofil umfasst;
wobei die Verbindungsanordnung (209) durch eine Befestigungsanordnung (214) an dem Hauptflügel (5) montiert ist, wobei die Befestigungsanordnung (214) eine primäre Verbindungsschnittstelle (216) und eine sekundäre Verbindungsschnittstelle (218) umfasst, wobei die primäre Verbindungsschnittstelle (216) über ein entsprechendes Verbindungselement (224) mit dem ersten Verbindungsprofil (216) verbunden ist und die sekundäre Verbindungsschnittstelle (218) über ein entsprechendes Verbindungselement (224) mit einem des mindestens einen zweiten Verbindungsprofils (218) verbunden ist;
wobei
die sekundäre Verbindungsschnittstelle (218) eine längliche Öffnung umfasst;
**dadurch gekennzeichnet, dass** die sekundäre Verbindungsschnittstelle (218) eine längliche Schnittstellenkomponente umfasst, die zwischen dem entsprechenden Verbindungselement (224) und der sekundären Schnittstelle angeordnet ist, um eine Relativbewegung zwischen der sekundären Verbindungsschnittstelle (218) und dem Verbindungselement (224) einzuschränken, um die Verbindungsanordnung (209) relativ zu dem Hauptflügel (5) zu sichern und eine Relativbewegung dazwischen zu verhindern.

2. Flügel (3) nach Anspruch 1, wobei die primäre Verbindungsschnittstelle (216) und die sekundäre Verbindungsschnittstelle (218) der Befestigungsanordnung (214) an einer Flügelkastenstruktur (226) des Hauptflügels definiert sind.

3. Flügel (3) nach Anspruch 1, wobei die Befestigungsanordnung (214) eine Halterung umfasst, die primären und sekundären Verbindungsschnittstellen (216, 218) an der Halterung definiert sind und die Verbindungsanordnung (209) über die Halterung an dem Hauptflügel (5) montiert ist.

4. Flügel (3) nach Anspruch 3, wobei die Halterung die Verbindungsanordnung (209) mit einem Holm des Hauptflügels (5) verbindet.

5. Flügel (3) nach einem der vorhergehenden Ansprüche, wobei die primäre Schnittstelle (216) eine kreisförmige Öffnung umfasst und wobei die längliche Öffnung der sekundären Verbindungsschnittstelle (218) eine Hauptachse (218) umfasst, die tangential relativ zu der primären Schnittstelle (216) ausgerichtet ist.

6. Flügel (3) nach einem der vorhergehenden Ansprüche, wobei die Geometrie der länglichen Verbindungskomponente basierend auf Informationen über die Position der sekundären Verbindungsschnittstelle (218) relativ zu dem entsprechenden Verbindungselement konfiguriert ist.

7. Flügel (3) nach einem der vorhergehenden Ansprüche, umfassend eine primäre Verbindungsschnittstelle (216) und zwei sekundäre Verbindungsschnittstellen (218) sowie ein erstes Verbindungsprofil und zwei zweite Verbindungsprofile.

8. Flügel (3) nach einem der vorhergehenden Ansprüche, wobei die primäre Verbindungsschnittstelle (216) relativ distal zum Hauptflügel (5) angeordnet ist und jede der mindestens einen sekundären Verbindungsschnittstelle (218) relativ proximal zum Hauptflügel (5) angeordnet ist.

9. Flügel (3) nach einem der vorhergehenden Ansprüche, wobei die längliche Schnittstellenkomponente in Form einer länglichen Buchse ausgebildet ist und so konfiguriert ist, dass sie eine Relativbewegung zwischen der sekundären Verbindungsschnittstelle (218) und dem Verbindungselement (224) verhindert.

10. Flügel (3) nach einem der vorhergehenden Ansprüche, wobei die Verbindungselemente (224), die jeweils der primären Verbindungsschnittstelle (216) und der mindestens einen sekundären Verbindungsschnittstelle (218) entsprechen, jeweils einen länglichen Verbinder umfassen.

11. Flügel (3) nach einem der vorhergehenden Ansprüche, wobei die Verbindungsanordnung (209) durch eine erste und eine zweite Befestigungsanordnung an dem Hauptflügel (5) montiert ist, wobei die erste Befestigungsanordnung einen ersten Satz primärer und sekundärer Verbindungsschnittstellen umfasst und die zweite Befestigungsanordnung einen zweiten Satz primärer und sekundärer Verbindungsschnittstellen umfasst, wobei der erste Satz primärer und sekundärer Schnittstellen ein Spiegelbild des zweiten Satzes primärer und sekundärer Verbindungsschnittstellen ist.

12. Flügel (3) nach Anspruch 11, wobei die erste Befestigungsanordnung den Hauptflügel an einer ersten Seite davon an der Verbindungsanordnung befestigt und die zweite Befestigungsanordnung den Hauptflügel an einer zweiten, gegenüberliegend angeordneten Seite davon an der Verbindungsanordnung befestigt.

13. Verfahren zum Einstellen der Hochauftriebsanordnung des Flügels (3) nach einem der Ansprüche 1 bis 12, umfassend:
Bereitstellen des Hauptflügels (5) und der Hochauftriebsanordnung;
Positionieren der Verbindungsanordnung (209) in einer gewünschten Position relativ zum Hauptflügel (5);
Verbinden der primären Verbindungsschnittstelle (216) der Befestigungsanordnung (214) mit dem ersten Verbindungsprofil der Verbindungsanordnung (209) über das entsprechende Verbindungselement (224);
Messen der relativen Position der sekundären Verbindungsschnittstelle relativ zum entsprechenden Verbindungselement (224), wobei sich die Verbindungsanordnung (209) in der gewünschten Position relativ zum Hauptflügel (5) befindet;
Konfigurieren der Geometrie der länglichen Schnittstellenkomponente basierend auf Informationen über die Position der sekundären Verbindungsschnittstelle relativ zum entsprechenden Verbindungselement, sodass die längliche Schnittstellenkomponente eine Relativbewegung zwischen der sekundären Verbindungsschnittstelle und dem entsprechenden Verbindungselement (224) einschränkt;
Verbinden der zweiten Schnittstelle (218) mit dem zweiten Verbindungsprofil der Verbindungsanordnung (209) über das entsprechende Verbindungselement (224), sodass das Verbindungselement (224) mit der länglichen Schnittstellenkomponente in Eingriff steht, um eine Relativbewegung zwischen dem Verbindungselement (224) und der sekundären Schnittstelle einzuschränken.

14. Verfahren nach Anspruch 13, wobei der Hauptflügel (5) und/oder die Hochauftriebsanordnung in einer vormontierten Form bereitgestellt werden und montiert werden, bevor die Verbindungsanordnung (209) an dem Hauptflügel (5) montiert wird, und wobei die längliche Schnittstellenkomponente nach dem Messen der relativen Position der sekundären Verbindungsschnittstelle relativ zum entsprechenden Verbindungselement mit der sekundären Verbindungsschnittstelle gekoppelt werden kann.

15. Ein Flugzeug (1), umfassend einen Flügel (3) nach einem der Ansprüche 1 bis 12.

## Revendications

1. Une voilure (3) pour un aéronef (1), comprenant :
une voilure principale (5) ; et
un ensemble hypersustentateur comprenant :
un corps hypersustentateur comprenant une structure hypersustentatrice ; et un ensemble de raccordement (209) raccordant de manière mobile le corps hypersustentateur (12) à la voilure principale (5), de telle sorte que le corps hypersustentateur est mobile entre une position rétractée et au moins une position déployée,
l'ensemble de raccordement (209) comprenant un premier profil de raccordement et au moins un second profil de raccordement ;
l'ensemble de raccordement (209) étant monté sur la voilure principale (5) par un agencement de montage (214), l'agencement de montage (214) comprenant une interface de raccordement primaire (216) et une interface de raccordement secondaire (218), l'interface de raccordement primaire (216) étant raccordée au premier profil de raccordement (216) via un élément de raccordement (224) correspondant et l'interface de raccordement secondaire (218) étant raccordée à l'un desdits au moins un second profils de raccordement (218) via un élément de raccordement (224) correspondant ;
dans laquelle
l'interface de raccordement secondaire (218) comprend une ouverture oblongue ; **caractérisée en ce que** l'interface de raccordement secondaire (218) comprend un composant d'interface oblong qui est situé entre l'élément de raccordement (224) correspondant et l'interface secondaire de manière à restreindre un mouvement relatif entre l'interface de raccordement secondaire (218) et l'élément de raccordement (224) afin de fixer l'ensemble de raccordement (209) par rapport à la voilure principale (5) et d'empêcher un mouvement relatif entre eux.

2. Voilure (3) selon la revendication 1, dans laquelle l'interface de raccordement primaire (216) et l'interface de raccordement secondaire (218) de l'agencement de montage (214) sont définies sur une structure de caisson de voilure (226) de la voilure principale.

3. Voilure (3) selon la revendication 1, dans laquelle l'agencement de montage (214) comprend un support, les interfaces de raccordement primaire et secondaire (216, 218) sont définies sur le support, et l'ensemble de raccordement (209) est monté sur la voilure principale (5) via le support.

4. Voilure (3) selon la revendication 3, dans laquelle le support raccorde l'ensemble de raccordement (209) à un longeron de la voilure principale (5).

5. Voilure (3) selon l'une quelconque des revendications précédentes, dans laquelle l'interface primaire (216) comprend une ouverture circulaire et dans laquelle l'ouverture oblongue de l'interface de raccordement secondaire (218) comprend un grand axe (218) orienté tangentiellement par rapport à l'interface primaire (216).

6. Voilure (3) selon l'une quelconque des revendications précédentes, dans laquelle la géométrie du composant de raccordement oblong est configurée sur la base d'informations concernant la position de l'interface de raccordement secondaire (218) par rapport à l'élément de raccordement correspondant.

7. Voilure (3) selon l'une quelconque des revendications précédentes, comprenant une interface de raccordement primaire (216) et deux interfaces de raccordement secondaires (218), ainsi qu'un premier profil de raccordement et deux seconds profils de raccordement.

8. Voilure (3) selon l'une quelconque des revendications précédentes, dans laquelle l'interface de raccordement primaire (216) est située de manière relativement distale par rapport à la voilure principale (5) et chacune desdites au moins une interface de raccordement secondaire (218) est située de manière relativement proximale par rapport à la voilure principale (5).

9. Voilure (3) selon l'une quelconque des revendications précédentes, dans laquelle le composant d'interface oblong se présente sous la forme d'une douille oblongue, et est configuré pour empêcher un mouvement relatif entre l'interface de raccordement secondaire (218) et l'élément de raccordement (224).

10. Voilure (3) selon l'une quelconque des revendications précédentes, dans laquelle les éléments de raccordement (224) correspondant à chacune de l'interface de raccordement primaire (216) et de ladite au moins une interface de raccordement secondaire (218) comprennent chacun un connecteur oblong.

11. Voilure (3) selon l'une quelconque des revendications précédentes, l'ensemble de raccordement (209) étant monté sur la voilure principale (5) par un premier et un second agencement de montage, le premier agencement de montage comprenant un premier ensemble d'interfaces de raccordement primaires et secondaires, et le second agencement de montage comprenant un second ensemble d'interfaces de raccordement primaires et secondaires, le premier ensemble d'interfaces primaires et secondaires étant une image miroir du second ensemble d'interfaces de raccordement primaires et secondaires.

12. Voilure (3) selon la revendication 11, dans laquelle le premier agencement de montage monte la voilure principale sur l'ensemble de raccordement au niveau d'un premier côté de celui-ci, et le second agencement de montage monte la voilure principale sur l'ensemble de raccordement au niveau d'un second côté de celui-ci, disposé à l'opposé.

13. Procédé de réglage de l'ensemble hypersustentateur de la voilure (3) selon l'une quelconque des revendications 1 à 12, comprenant :
la fourniture de la voilure principale (5) et de l'ensemble hypersustentateur ;
le positionnement de l'ensemble de raccordement (209) dans une position souhaitée par rapport à la voilure principale (5) ;
le raccordement de l'interface de raccordement primaire (216) de l'agencement de montage (214) au premier profil de raccordement de l'ensemble de raccordement (209) via l'élément de raccordement (224) correspondant ;
la mesure de l'emplacement relatif de l'interface de raccordement secondaire par rapport à l'élément de raccordement (224) correspondant, avec l'ensemble de raccordement (209) dans la position souhaitée par rapport à la voilure principale (5) ;
la configuration de la géométrie du composant d'interface oblong sur la base d'informations concernant la position de l'interface de raccordement secondaire par rapport à l'élément de raccordement correspondant de telle sorte que le composant d'interface oblong restreigne un mouvement relatif entre l'interface de raccordement secondaire et l'élément de raccordement (224) correspondant ;
le raccordement de la seconde interface (218) au second profil de raccordement de l'ensemble de raccordement (209) via l'élément de raccordement (224) correspondant de telle sorte que l'élément de raccordement (224) vienne en prise avec le composant d'interface oblong de manière à restreindre un mouvement relatif entre l'élément de raccordement (224) et l'interface secondaire.

14. Procédé selon la revendication 13, dans lequel la voilure principale (5) et/ou l'ensemble hypersustentateur sont fournis sous une forme préassemblée, et sont assemblés avant que l'ensemble de raccordement (209) ne soit monté sur la voilure principale (5), et dans lequel le composant d'interface oblong peut être accouplé à l'interface de raccordement secondaire après avoir mesuré l'emplacement relatif de l'interface de raccordement secondaire par rapport à l'élément de raccordement correspondant.

15. Aéronef (1) comprenant une voilure (3) selon l'une quelconque des revendications 1 à 12.
